(19) Europäisches Patentamt
European Patent Office
Office européen des brevets

(11) **EP 3 896 487 B1**

(12) **EUROPÄISCHE PATENTSCHRIFT**

(45) Veröffentlichungstag und Bekanntmachung des Hinweises auf die Patenterteilung:
**19.02.2025  Patentblatt 2025/08**

(21) Anmeldenummer: **20169585.5**

(22) Anmeldetag: **15.04.2020**

(51) Internationale Patentklassifikation (IPC):
**G01S 15/931** (2020.01)     **G01S 15/87** (2006.01)
**G01S 15/42** (2006.01)      **G10K 11/34** (2006.01)
**G01S 7/539** (2006.01)

(52) Gemeinsame Patentklassifikation (CPC):
**G01S 15/931; G01S 7/539; G01S 15/42;**
**G01S 15/876; G10K 11/346**

(54) **VERFAHREN UND VORRICHTUNG ZUM ERFASSEN VON UMGEBUNGSOBJEKTEN MIT EINEM ULTRASCHALL-SENSORSYSTEM SOWIE ULTRASCHALL-SENSORSYSTEM**

ULTRASONIC SENSOR SYSTEM AND METHOD AND DEVICE FOR DETECTING ENVIRONMENTAL OBJECTS USING AN ULTRASONIC SENSOR SYSTEM

PROCÉDÉ ET DISPOSITIF DE DÉTECTION DES OBJETS ENVIRONNEMENTAUX DOTÉ D'UN SYSTÈME DE CAPTEURS À ULTRASONS ET SYSTÈME DE CAPTEURS À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.10.2021  Patentblatt 2021/42**

(73) Patentinhaber: **Elmos Semiconductor SE**
**51379 Leverkusen (DE)**

(72) Erfinder: **Ackermann, Dimitri**
**44309 Dortmund (DE)**

(74) Vertreter: **Banse & Steglich**
**Patentanwälte PartmbB**
**Patentanwaltskanzlei**
**Herzog-Heinrich-Straße 23**
**80336 München (DE)**

(56) Entgegenhaltungen:
**DE-A1- 102017 121 581**

• **POPPERLI MAXIMILIAN ET AL: "Capsule Neural Network based Height Classification using Low-Cost Automotive Ultrasonic Sensors", 2019 IEEE INTELLIGENT VEHICLES SYMPOSIUM (IV), IEEE, 9 June 2019 (2019-06-09), pages 661 - 666, XP033606011, DOI: 10.1109/IVS.2019.8813879**

**Beschreibung**

Technisches Gebiet

Die Erfindung betrifft Ultraschall-Sensorsysteme zum Erfassen von in einer Umgebung befindlichen Umgebungsobjekten.

Technischer Hintergrund

Ultraschallsensoren finden vielfältige Anwendung bei der Erfassung von Umgebungsobjekten in dem Umgebungsbereich und zum Ermitteln deren Abstands. Beispielsweise werden in Kraftfahrzeugen als Einparkhilfe am vorderen und hinteren Stoßfänger Ultraschall-Sensorsysteme mit mehreren Ultraschallsensoren eingesetzt, die den Abstand zu einem sich nähernden Umgebungsobjekt detektieren und so den Fahrer bei einem Rangieren unterstützen.

Bei heutigen Ultraschall-Sensorsystemen wird jedoch lediglich der Abstand zu einem detektierten Umgebungsobjekt ausgewertet. Bei mehreren Objekten wird als Abstand zu einem Umgebungsobjekt der jeweils kürzeste Abstand angenommen und zur Signalisierung einer entsprechenden Warnung an den Fahrer des Kraftfahrzeugs verwendet. Jedoch können auch Umgebungsobjekte, die das Rangieren des Fahrzeugs nur unwesentlich behindern, wie beispielsweise Bordsteinkanten, ebenfalls zu einer Erkennung führen und der Fahrer gegebenenfalls gewarnt werden, obwohl kein das Rangieren beeinträchtigendes Umgebungsobjekt vorhanden ist oder der Abstand zu einem solchen Umgebungsobjekt deutlich größer ist. Auch für andere Anwendungen, insbesondere Visualisierungsanwendungen, kann es sinnvoll sein, ein Abstandsprofil der im Umgebungsbereich des Kraftfahrzeugs vorliegenden Umgebungsobjekte bereitzustellen. Insbesondere kann eine solche Abstandsprofilinformation auch für Anwendungen des autonomen oder halbautonomen Fahrens verwendet werden.

Bei der Auswertung von Ultraschallsensorsignalen können zur Lokalisierung von Umgebungsobjekten verschiedene Arten von Informationen ausgewertet werden. Über Signallaufzeitmessungen und Dämpfungsmessungen kann ein Abstand des detektierten Umgebungsobjekts ermittelt werden. Zudem kann sich eine Sende-Richtcharakteristik eines Ultraschallsenders und eine Empfangs-Richtcharakteristik eines Ultraschallempfängers ebenfalls auf die Amplitudenstärke des empfangenen Ultraschallsignals auswirken und einen Hinweis auf die Position eines im Erfassungsbereich befindlichen Umgebungsobjekts angeben.

Bei der Lokalisierung von mehreren Umgebungsobjekten mittels so bestimmter Abstände besteht ein Nachteil, dass die Zuordnung mehrerer Abstände zu einer Position nicht eindeutig ist und somit falsche Positionen der Umgebungsobjekte bestimmt werden können.

Weiterhin kann insbesondere bei Verwendung einer entsprechenden Ultraschallsensorbaugruppe aus mehreren Ultraschallsensoren auch anhand einer Phasenverschiebung zwischen Empfangssignalen mehrerer Ultraschallsensoren einer Sensorbaugruppe auf eine Richtung geschlossen werden, in der sich das zu detektierende Umgebungsobjekt befindet. Nachteilig ist hierbei, dass eine eindeutige Richtungsbestimmung Abstände zwischen den empfangenden Ultraschallsensoren einer Sensorbaugruppe erfordert, die kleiner als eine halbe Wellenlänge sein müssen. Diese kleinen Ultraschallsensoren wären sehr klein und ineffizient.

Weiterhin kann bei Verwendung einer Ultraschallsensorbaugruppe aus mehreren Ultraschallsensoren mit unterschiedlichen Empfangsrichtcharakteristiken auch anhand von Amplitudenunterschieden zwischen den Empfangssignalen mehrerer Ultraschallsensoren auf die Position des detektierten Umgebungsobjektes geschlossen werden.

Aus der Druckschrift DE 10 2017 011 329 A1 ist eine Signalverarbeitungsanordnung zur Klassifizierung von Objekten aufgrund der Signale einer Mehrzahl verschiedener Sensoren bekannt, wobei wenigstens einem Teil der Sensoren mehr als ein neuronales Netzwerk zugeordnet ist, wobei die neuronalen Netzwerke zur Verarbeitung von unterschiedlichen Charakteristiken des zu klassifizierenden Objekts ausgelegt und trainierbar sind und die Ausgänge der neuronalen Netzwerke einen Merkmalsvektor bilden, wobei der Merkmalsvektor auf ein weiteres neuronales Netzwerk aufgeschaltet ist, das zur

Bestimmung von Assoziationen aus dem Merkmalsvektor und zur Erzeugung einer Assoziationsinformation ausgelegt und trainierbar ist, und wobei die Assoziationsinformation auf Identifikations- und Klassifikationsmittel aufgeschaltet ist, durch die eine endgültige Identifikationsinformation erzeugbar ist.

Die Druckschrift DE 10 2017 121581 A1 offenbart die Nutzung eines neuronalen Netzes zum Verarbeiten von Empfangssignalen eines Ultraschallsensors, insbesondere indem die Ultraschalldaten für jeden Ultraschallsensor in einen eindimensionalen Vektor aus Werten für die diskreten Ultraschalldaten von jeweils aufeinanderfolgenden Empfangszeitpunkten konvertiert werden und die so erstellen Vektoren zu einer zweidimensionalen Matrix kombiniert werden. Diese Matrix dient als Eingabeinformation für das neuronale Netzwerk.

Die Druckschrift Popperli M. et al., "Capsule Neural Network based Height Clasification using Low-cost Automotive Ultrasonic Sensors", 2019, IEEE Intelligent Vehicle Symposium, Seiten 661- 666 offenbart ein Verfahren zum Ermitteln von Höhenklassen von Objekten in einem Erfassungsbereich von Ultraschall-Sensoren. Die Sensorrohdaten werden vorverarbeitet durch Abtasten, Tiefpassfiltern und Reorganisieren, bevor diese dem neuronalen Netzwerk zugeführt werden.

Es ist Aufgabe der vorliegenden Erfindung, ein verbessertes Verfahren zum Erfassen eines Abstandsprofils bezüglich eines oder mehrerer Umgebungsobjekte zur Verfügung zu stellen, das die Nachteile der einzelnen Messverfahren vermeidet und eine verbesserte Information über die Position von Umgebungsobjekten im Erfassungsbereich eines Ultraschall-Sensorsystems bereitstellt.

Offenbarung der Erfindung

Diese Aufgabe wird durch das Verfahren zum Betreiben eines Ultraschall-Sensorsystems mit mehreren Ultraschallsendern und mehreren Ultraschallempfängern zum Erfassen von Umgebungsobjekten in einem Erfassungsbereich gemäß Anspruch 1 sowie durch die Vorrichtung und das Ultraschall-Sensorsystem gemäß den nebengeordneten Ansprüchen gelöst.

Weitere Ausgestaltungen sind in den abhängigen Ansprüchen angegeben.

Gemäß einem ersten Aspekt ist ein in einer Steuereinheit implementiertes Verfahren zum Betreiben eines Ultraschall-Sensorsystems mit mehreren Ultraschallsendern und mehreren Ultraschallempfängern zum Erfassen von Umgebungsobjekten in einem Erfassungsbereich vorgesehen, wobei insbesondere die Ultraschallsender und Ultraschallempfänger als Ultraschallwandler ausgebildet sind, mit folgenden Schritten:

- Aussenden eines Ultraschallsendesignals durch einen der Ultraschallsender und Empfangen eines jeweiligen Ultraschallempfangssignals durch die Ultraschallempfänger, wobei jeweils eine Signalverlaufsangabe bereitgestellt wird, die den zeitlichen Verlauf der Signalstärke mit Bezug zu dem Aussendezeitpunkt des Ultraschallsendesignals angibt;
- Ermitteln eines Abstandsprofils abhängig von den Signalverlaufsangaben mithilfe eines neuronalen Netzes, das trainiert ist, abhängig von den Signalverlaufsangaben ein Abstandsprofil über im Erfassungsbereich befindliche Umgebungsobjekte auszugeben.

Das Ermitteln des Abstandsprofils umfasst die folgenden weiteren Schritte:

- Erstellen von den Erfassungsbereich repräsentierenden Volumenkarten für jede Kombination eines sendenden Ultraschallwandlers oder Ultraschallsenders und eines empfangenden Ultraschallwandlers oder eines Ultraschallempfängers abhängig von den jeweiligen Signalverlaufsangaben, wobei eine Volumenkarte mögliche Positionen von Umgebungsobjekten abhängig von der Signalverlaufsangabe angibt,

   wobei Elemente der Volumenkarte jeweils eine Signalstärkenangabe als ein Wert der Signalverlaufsangabe zu einem bestimmten Zeitpunkt nach dem Zeitpunkt des Aussendens des Ultraschallsendesignals zugeordnet wird, wobei die Volumenkarte einer 3D-Matrix entspricht und in der Volumenkarte jedes Element einem zu repräsentierenden Raumpunkt bzw. Raumbereich des Erfassungsbereichs zugeordnet ist, wobei die Signalstärkenangabe, die dem Element zugeordnet wird, demjenigen Wert der Signalverlaufsangabe zu einem Zeitpunkt, der der Signallaufzeit entlang einer Strecke vom sendenden Ultraschallwandler bzw. Ultraschallsender zu dem das Element repräsentierenden Raumpunkt im Erfassungsbereich und zurück zu dem empfangenden Ultraschallwandler bzw. Ultraschallempfänger entspricht, wobei die Volumenkarte abhängig von den Positionen des betreffenden Ultraschallsenders und des betreffenden Ultraschallempfängers erstellt wird, wobei den Elementen der Volumenkarte jeweils diejenige Signalstärke der betreffenden Signalverlaufsangabe zugeordnet wird, die einem Zeitpunkt mit Bezug auf das Aussenden des Ultraschallsendesignals zugeordnet ist, der der Signallaufzeit des Ultraschallsendesignals zwischen dem Senden und dem Empfangen entspricht;

- Ermitteln eines Abstandsprofils abhängig von den Volumenkarten und mithilfe des neuronalen Netzes, das trainiert ist, um den Volumenkarten ein Abstandsprofil über im Erfassungsbereich befindliche Umgebungsobjekte zuzuordnen.

Das Abstandsprofil kann einerseits für jede Raumrichtung ausgehend von einem Bezugspunkt des Ultraschall-Sensorsystems den Abstand eines Umgebungsobjekts bzw. eines Reflexionspunktes auf einem Umgebungsobjekt angeben. Dies kann beispielsweise durch eine eine vertikale Fläche des Erfassungsbereichs senkrecht zur Erfassungsrichtung repräsentierende Umgebungskarte angegeben werden, deren Einträge den jeweiligen Abstand zu einem Reflexionspunkt angeben.

Es kann andererseits vorgesehen sein, dass das Abstandsprofil ein Flächenprofil darstellt, das den Umgebungsobjekten eine Höhenangabe oder eine Höhenklassen (Klassen von Höhenbereichen) über einer beispielsweise horizontalen Grundfläche zuordnet. Eine Idee des obigen Verfahrens besteht darin, die verschiedenartigen Informationen aus Ultraschallsensoren eines Ultraschall-Sensorsystems einheitlich zu nutzen, um ein Abstandsprofil von in dem Erfassungsbereich befindlichen Umgebungsobjekten bzw. genauer von Reflexionspunkten an den Umgebungsobjekten zu erstellen.

Ein Ultraschall-Sensorsystem weist in der Regel eine Anzahl von Ultraschallsendern und Ultraschallempfängern auf, wobei ein Ultraschallsender und ein Ultraschallempfänger in der Regel baulich gemeinsam in einem Ultraschallwandler ausgebildet sind. Ein solcher Ultraschallwandler nutzt eine Membran sowohl zum Senden eines Ultraschall-Sendesignals als auch zum Empfangen eines an einem oder mehreren Reflexionspunkten eines oder mehrerer Umgebungsobjekte reflektierten Ultraschall-Empfangssignals.

In einem Ultraschall-Sensorsystem werden die Ultraschallwandler nacheinander angesteuert, um ein entsprechendes Ultraschall-Sendesignal auszugeben. Dieses Ultraschall-Sendesignal kann ein Ultraschallimpuls oder ein frequenzmoduliertes oder phasenmoduliertes Ultraschallsignal sein. Die Ultraschallwandler empfangen beim Vorhandensein eines Umgebungsobjekts im Erfassungsbereich ein reflektiertes Ultraschallsignal als Ultraschall-Empfangssignal. Das durch den Ultraschallwandler erfasste Ultraschall-Empfangssignal wird in ein elektrisches Wandler-Empfangssignal gewandelt. In der Regel wird im Ultraschall-Wandler das Wandler-Empfangssignal verarbeitet und eine Signalverlaufsangabe erzeugt, die einen zeitlichen Verlauf der Signalstärke (Amplitudenstärke) des Ultraschall-Empfangssignals angibt. Im Falle von frequenzmodulierten oder phasenmodulierten Signalen können geeignete Filter verwendet werden, um die Signalverlaufsangabe zu erzeugen. Diese Signalverlaufsangabe entspricht einer Hüllkurve des empfangenen Rohsignals (Ultraschall-Empfangssignal). Die Hüllkurve gibt den zeitlichen Amplitudenverlauf über einen Empfangszeitraum des Ultraschall-Empfangssignals an.

In der Regel werden die Ultraschallwandler einer nach dem anderen zum Senden des Ultraschall-Sendesignals in einer Sendephase angesteuert, so dass zu jeder Sendephase jeder der Ultraschallwandler ein entsprechendes Ultraschall-Empfangssignal empfängt und ein entsprechendes Wandler-Empfangssignal bereitstellt. Beim Betreiben des Ultraschall-Sensorsystems können daher jeweils Signalwege des Ultraschallsignals zwischen einem Ultraschallwandler und demselben und anderen empfangenden Ultraschallwandlern ausgewertet werden. Bei der Auswertung können beispielsweise die Signallaufzeiten vom sendenden Ultraschallwandler (Ultraschallsender) zum Reflexionspunkt und vom Reflexionspunkt zu jedem empfangenden Ultraschallwandler (Ultraschallempfänger) und eine jeweilige Dämpfungsinformation berücksichtigt werden. Die Dämpfungsinformation hängt dabei von der Dämpfung des Ultraschallsignals über den Signalweg vom betreffenden Ultraschallwandler zum Reflexionspunkt und vom Reflexionspunkt zum Ultraschallwandler und von einer Sende-Richtcharakteristik und Empfangs-Richtcharakteristik des Ultraschallwandlers für das Senden und das Empfangen von Ultraschallsignalen ab. Somit ist die jeweilige Signalverlaufsangabe durch die Signallaufzeitinformation und die Dämpfungsinformation bestimmt, wobei die Signalverlaufsangabe auch durch den Empfang mehrerer Ultraschallempfangssignale von einem oder mehreren Reflexionspunkten eines oder mehrerer Umgebungsobjekte bestimmt sein kann.

Zum Auswerten der empfangenen Ultraschall-Empfangssignale wird gemäß dem obigen Verfahren vorgeschlagen, ein künstliches neuronales Netz zu verwenden, das trainiert ist, abhängig von Eingangsdaten, die den Signalverlaufsangaben entsprechen können, diese umfassen können oder davon abgeleitet werden können, ein Abstandsprofil auszugeben, das eine Position eines oder mehrerer Umgebungsobjekte angibt.

Es kann sinnvoll sein, die Signalverlaufsangaben vorzuverarbeiten, so dass eine bessere Repräsentation von möglichen Positionsangaben bereitgestellt wird. Dazu werden Signalverlaufsangaben, die von den Ultraschallwandlern bereitgestellt werden, zum Erstellen einer jeweiligen Volumenkarte verwendet. Dazu wird für jede Kombination eines sendenden Ultraschallwandlers (Ultraschallsenders) und eines empfangenden Ultraschallwandlers (Ultraschallempfängers) eine Volumenkarte erstellt, indem den Voxeln der Volumenkarte ein Wert der Signalverlaufsangabe zu einem bestimmten Zeitpunkt nach dem Zeitpunkt des Aussendens des Ultraschall-Empfangssignals zugeordnet wird. Die Volumenkarte entspricht einer 3D Matrix, in denen jedes Element einem zu repräsentierenden Raumpunkt bzw. Raumbereich des Erfassungsbereichs zugeordnet ist.

Die Volumenkarte entspricht einer Repräsentation des Erfassungsbereichs des Ultraschall-Sensorsystems und ist in geeigneter Weise gerastert. Die Volumenkarte weist somit Volumenpunkte/Voxel auf, denen jeweils eine Signalstärkenangabe als Wert der Signalverlaufsangabe zu einem bestimmten Zeitpunkt zugeordnet ist. Die Signalstärkenangabe, die dem Voxel zugeordnet wird, entspricht demjenigen Wert der Signalverlaufsangabe zu einem Zeitpunkt, der der Signallaufzeit entlang der Strecke vom sendenden Ultraschallwandler (Ultraschallsender) zu dem das Voxel repräsentierenden Raumpunkt im Erfassungsbereich und zurück zu dem empfangenden Ultraschallwandler (Ultraschallempfänger) entspricht. Die Strecke ergibt sich aus den Raumkoordinaten der betreffenden Ultraschallwandler und dem das Voxel repräsentierenden Raumpunkt im Erfassungsbereich. Der Zeitpunkt ergibt sich aus dem Sendezeitpunkt des Ultraschallsendesignals und der Zeitdauer der Signallaufzeit abhängig von der Schallgeschwindigkeit der Umgebungsluft. Auf diese Weise können für jede Signalverlaufsangabe, d. h. für jede Ultraschallsender-Ultraschallempfänger-Kombination, Volumenkarten erstellt werden. Derartige Volumenkarten erleichtern in erheblichem Maße die nachfolgende Auswertung mithilfe des künstlichen neuronalen Netzes.

Mit anderen Worten, jedes Voxel bildet einen Raumpunkt des Erfassungsbereichs ab. Die Signallaufzeit des Ultraschallsignals von dem sendenden Ultraschallwandler zu dem Raumpunkt und von dem Raumpunkt zu dem empfangenden Ultraschallwandler wird ermittelt und einer Signalamplitude der Signallaufzeitangabe zugeordnet, der der Signallaufzeit entspricht. Die entsprechende Signalamplitude der Signallaufzeitangabe wird dem betreffenden Voxel zugeordnet.

Somit kann das neuronale Netz trainiert sein, als Abstandsprofil eine Höhenprofilkarte auszugeben. Diese kann in Form einer zweidimensionalen Matrix erstellt sein, die die flächige (horizontale) Erstreckung des Erfassungsbereichs angibt. Die Matrix kann Höhenklassen oder Höhenangaben an den durch die Elemente der Matrix zugeordneten Positionen des Erfassungsbereichs, an denen Umgebungsobjekte detektiert worden sind, angeben. Dies ist für eine Anwendung für Kraftfahrzeuge ausreichend, da schwebende Umgebungsobjekte in der Fahrzeugumgebung in der Regel nicht vorkommen. Selbstverständlich ist jedoch auch ein Abstandsprofil in Form einer dreidimensionalen Umgebungskarte möglich, eine ausreichende Anzahl von Ultraschallwandlern (bzw. Ultraschallsendern und -empfängern) vorausgesetzt.

Das neuronale Netz kann als ein konvolutionelles (gefaltetes) neuronales Netz (fully convolutional network) ausgebildet sein.

Gemäß einer Ausführungsform können ein oder mehrere Ultraschallsender und ein oder mehrere Ultraschallempfänger, insbesondere mit identischen oder verschiedenen Richtcharakteristiken, in einer Sensorbaugruppe angeordnet sein, wobei jeweils eine Phasenversatzverlaufsangabe bereitgestellt wird, die den zeitlichen Verlauf des Phasenversatzes zwischen jeweils zwei Ultraschallempfangssignalen von mindestens zwei Ultraschallempfängern der Sensorbaugruppe angibt; wobei mindestens eine weitere, den Erfassungsbereich repräsentierende Volumenkarte abhängig von jeweils mindestens einer der Phasenversatzverlaufsangabe erstellt wird, wobei die weitere Volumenkarte mögliche Positionen von Umgebungsobjekten abhängig von der Phasenversatzverlaufsangabe angibt.

Insbesondere kann die weitere Volumenkarte abhängig von den Positionen des betreffenden Ultraschallsenders und des betreffenden Ultraschallempfängers erstellt werden, wobei den Voxeln der Volumenkarte jeweils derjenige Phasenversatz der betreffenden Phasenversatzverlaufsangabe zugeordnet wird, die einem Zeitpunkt mit Bezug auf das Aussenden des Ultraschallsendesignals zugeordnet ist, der der Signallaufzeit des Ultraschallsendesignals und des Ultraschallempfangssignals entspricht.

Gemäß einem weiteren Aspekt ist ein Ultraschall-Sensorsystem mit mehreren Ultraschallsendern und mehreren Ultraschallempfängern zum Erfassen von Umgebungsobjekten in einem Erfassungsbereich und einer Steuereinheit vorgesehen, wobei insbesondere die Ultraschallsender und Ultraschallempfänger als Ultraschallwandler ausgebildet sind, wobei die Steuereinheit ausgebildet ist zum:

- Steuern des Aussendens eines Ultraschallsendesignals durch einen der Ultraschallsender und des Empfangens eines jeweiligen Ultraschallempfangssignals durch die Ultraschallempfänger, wobei jeweils eine Signalverlaufsangabe bereitgestellt wird, die den zeitlichen Verlauf der Signalstärke mit Bezug zu dem Aussendezeitpunkt des Ultraschallsendesignals angibt;
- Ermitteln eines Abstandsprofils abhängig von den Signalverlaufsangaben mithilfe eines neuronalen Netzes, das trainiert ist, abhängig von den Signalverlaufsangaben ein Abstandsprofil über im Erfassungsbereich befindliche Umgebungsobjekte auszugeben;
- Erstellen von den Erfassungsbereich repräsentierenden Volumenkarten für jede Kombination eines sendenden Ultraschallwandlers oder Ultraschallsenders und eines empfangenden Ultraschallwandlers oder eines Ultraschallempfängers abhängig von den jeweiligen Signalverlaufsangaben, wobei eine Volumenkarte mögliche Positionen von Umgebungsobjekten abhängig von der Signalverlaufsangabe angibt,

   wobei Elementen der Volumenkarte jeweils eine Signalstärkenangabe als ein Wert der Signalverlaufsangabe zu einem bestimmten Zeitpunkt nach dem Zeitpunkt des Aussendens des Ultraschallsendesignals zugeordnet wird, wobei die Volumenkarte einer 3D-Matrix entspricht und in der Volumenkarte jedes Element einem zu repräsentierenden Raumpunkt bzw. Raumbereich des Erfassungsbereichs zugeordnet ist, wobei die Signalstärkenangabe, die dem Element zugeordnet wird, demjenigen Wert der Signalverlaufsangabe zu einem Zeitpunkt, der der Signallaufzeit entlang einer Strecke vom sendenden Ultraschallwandler bzw. Ultraschallsender zu dem das Element repräsentierenden Raumpunkt im Erfassungsbereich und zurück zu dem empfangenden Ultraschallwandler bzw. Ultraschallempfänger entspricht, wobei die Volumenkarte abhängig von den Positionen des betreffenden Ultraschallsenders und des betreffenden Ultraschallempfängers erstellt wird, wobei den Elementen der Volumenkarte jeweils diejenige Signalstärke der betreffenden Signalverlaufsangabe zugeordnet wird, die einem Zeitpunkt mit Bezug auf das Aussenden des Ultraschallsendesignals zugeordnet ist, der der Signallaufzeit des Ultraschallsendesignals und des Ultraschallempfangssignals entspricht;

- Ermitteln eines Abstandsprofils abhängig von den Volumenkarten und mithilfe des neuronalen Netzes, das trainiert ist, um den Volumenkarten ein Abstandsprofil über im Erfassungsbereich befindliche Umgebungsobjekte zuzuordnen.

Es kann vorgesehen sein, dass ein oder mehrere der Ultraschallsender einer Sensorbaugruppe und ein oder mehrere der Ultraschallempfänger einer Sensorbaugruppe nicht mehr als das Fünffache der Wellenlänge des ausgesandten Ultraschallsendesignals voneinander beabstandet sind, wobei insbesondere diese mehr als eine halbe Wellenlänge des ausgesandten Ultraschallsendesignals voneinander beabstandet sind.

Kurzbeschreibung der Zeichnungen

Ausführungsformen werden nachfolgend anhand der beigefügten Zeichnungen näher beschrieben. Es zeigen:

Figur 1 ein beispielhaftes Ultraschall-Sensorsystem mit drei Ultraschallwandlern mit Signalwegen für ein Umgebungsobjekt mit zwei Reflexionspunkten;

Figuren 2a und 2b beispielhafte Darstellungen einer Richtcharakteristik für einen Ultraschallwandler und Richtcharakteristiken für eine Sensorbaugruppe aus mehreren Ultraschallwandlern;

Figur 3 ein Ultraschall-Sensorsystem mit drei Sensorbaugruppen mit jeweils drei Ultraschallwandlern zur zusätzlichen Erfassung von Phasendifferenzen zwischen Ultraschall-Empfangssignalen in einer Sensorbaugruppe;

Figur 4 ein Flussdiagramm zur Veranschaulichung eines Verfahrens zum Ermitteln eines Abstandsprofils bezüglich Umgebungsobjekten in einem Erfassungsbereich mithilfe des Ultraschall-Sensorsystems;

Figur 5 ein Blockdiagramm zur Veranschaulichung einer möglichen Topologie eines konvolutionellen neuronalen Netzes zum Erstellen der Umgebungskarte; und

Figuren 6a und 6b schematische Darstellungen von beispielhaften Abstandsprofilen als Höhenprofil bzw. Höhenklassenprofil.

Beschreibung von Ausführungsformen

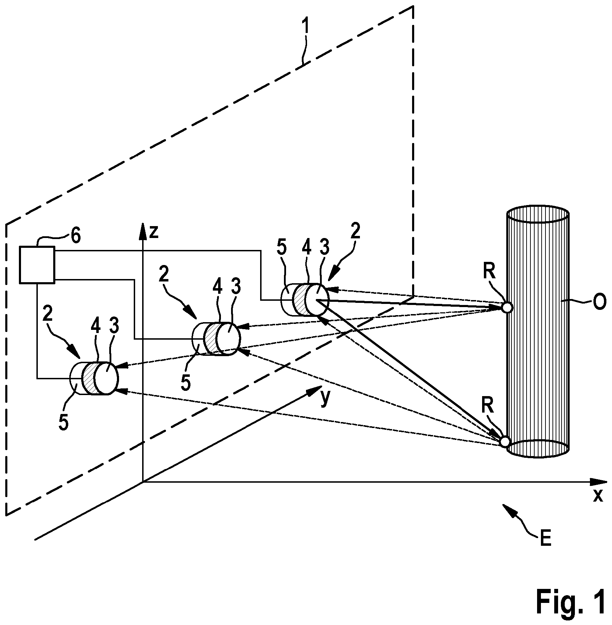

Figur 1 zeigt ein beispielhaftes Ultraschall-Sensorsystem 1 mit einer Anzahl von Ultraschallwandlern 2, im vorliegenden Ausführungsbeispiel drei Ultraschallwandlern 2, zur Erfassung von Umgebungsobjekten O in einem Erfassungsbereich E. Die Ultraschallwandler 2 vereinen die Funktion eines Ultraschallsenders und Ultraschallempfängers in einem Bauteil. Alternativ kann das Ultraschall-Sensorsystem mit separaten Ultraschallsendern und Ultraschallempfängern ausgebildet sein.

Die Ultraschallwandler 2 weisen in bekannter Weise eine Schwingmembran 3 auf, die mithilfe eines Piezoaktuators 4 angeregt werden kann, um ein Ultraschallsendesignal zu erzeugen. Die Frequenz des Ultraschallsendesignals kann beispielsweise zwischen 30 kHz und 100 kHz, vorzugsweise zwischen 40 kHz und 60 kHz betragen. Dieselbe Schwingmembran 3 kann zum Empfangen eines Ultraschall-Empfangssignals verwendet werden, das die Schwingmembran 3 zum Schwingen anregt, wobei der Piezoaktuator 4 ein entsprechendes elektrisches Signal bereitstellt.

Die Ultraschallwandler 2 sind jeweils mit einer Ansteuerelektronik 5 versehen, die ausgebildet ist, um einen Impuls eines Ultraschallsendesignals durch Ansteuerung des Piezoaktuators 4 zu erzeugen. Weiterhin ist die Ansteuerelektronik 5 ausgebildet, um ein elektrisches Signal von dem Piezoaktuator 4, das aufgrund einer Anregung durch ein empfangenes Ultraschall-Empfangssignal erzeugt wird, vorzuverarbeiten.

Der Betrieb der Ultraschallwandler 2 wird durch eine Steuereinheit 6 gesteuert. Insbesondere triggert die Steuereinheit 6 das Aussenden eines Ultraschall-Sendesignals. Dieses Ultraschall-Sendesignal basiert auf einer Rechteckansteuerung für einen in der Steuereinheit 6 bekannten Sendezeitpunkt. Die Ansteuerelektronik 5 des betreffenden Ultraschallwandlers 2 erfasst ab dem Aussendezeitpunkt des Ultraschall-Sendesignals, z. B. zum Zeitpunkt des Endes des Signalimpulses des Ultraschall-Sendesignals, die Anregungen der Schwingmembran 3 und liefert einen zeitlichen Verlauf der Amplitudenstärke des Schwingungssignals an die Steuereinheit als Signalverlaufsangabe. Mit anderen Worten, die Signalverlaufsangabe entspricht einer Zeitreihe von Amplitudenwerten des elektrischen Empfangssignals des Ultraschallwandlers. Da die Erfassung des Ultraschallempfangssignals zu einem bekannten Zeitpunkt (Aussendezeitpunkt) gestartet wird, ist ein zeitlicher Bezug zwischen dem Ultraschall-Sendesignal und dem Ultraschall-Empfangssignal in der Steuereinheit 6 bekannt.

Beim Betrieb des Ultraschallsensorsystems 1 steuert die Steuereinheit 6 die Ultraschallwandler 2 bzw. die Ultraschallsender (bei separater Ausführung von Ultraschallsendern und Ultraschallempfängern) separat nacheinander an und empfängt von den Ultraschallwandlern 2 bzw. den Ultraschallempfängern die Signalverlaufsangaben für die entsprechend empfangenen Ultraschall-Empfangssignale.

Die Darstellung der Figur 1 zeigt Signalstrecken für das Ultraschallsendesignal (durchgezogener Pfeil) beim Aussenden und für die an Reflexionspunkten R an dem Umgebungsobjekt reflektierten Ultraschallempfangssignale (gestrichelte Pfeile) für das Empfangen. Die an den verschiedenen Reflexionspunkten reflektierten Ultraschallempfangssignale überlagern sich bei den empfangenden Ultraschallwandlern 2, so dass die Signalverlaufsangabe des empfangenen Ultraschall-Empfangssignals in der Regel mehrere Signalstärkenmaxima aufweist.

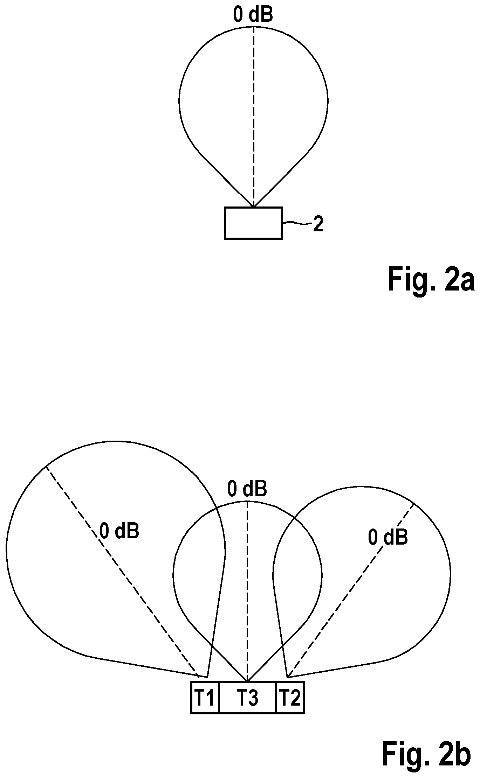

Bei bekannten Signalstärken des ausgesendeten Ultraschall-Sendesignals enthält somit jedes Ultraschall-Empfangssignal mehrere Informationen über die im Erfassungsbereich E befindlichen Umgebungsobjekte O. Zum einen kann die Signallaufzeit des Ultraschallsignals zwischen dem Sendezeitpunkt und dem Empfangszeitpunkt eine Angabe über die Entfernung des an dem Umgebungsobjekt O reflektierten Ultraschallempfangssignals angeben. Weiterhin kann die Signalstärke des im Ultraschallwandler 2 empfangenen Ultraschall-Empfangssignals aufgrund der Dämpfung über der Signalstrecke des Ultraschallsignals ebenfalls eine Angabe über die Entfernung des Reflexionspunktes R an dem Umgebungsobjekt O beinhalten. Zudem weist jeder Ultraschallwandler 2 eine Richtcharakteristik auf, wie sie beispielsweise in Figur 2a dargestellt ist. Die Richtcharakteristik betrifft sowohl eine Sende-Richtcharakteristik, bei der die Signalstärke des ausgesandten Ultraschallsendesignals bezüglich der Ausrichtung des Ultraschallwandlers richtungsabhängig ist, als auch eine Empfangs-Richtcharakteristik, bei der die Signalstärke des empfangenen Ultraschallsendesignals richtungsabhängig ist. Diese Effekte überlagern sich und spiegeln sich in dem zeitlichen Verlauf der Signalstärke des Ultraschall-Empfangssignals wider, so dass die resultierende Signalverlaufsangabe in entsprechender Weise ausgewertet werden kann.

In Figur 2b sind die Richtcharakteristiken von Ultraschallwandlern 2 dargestellt

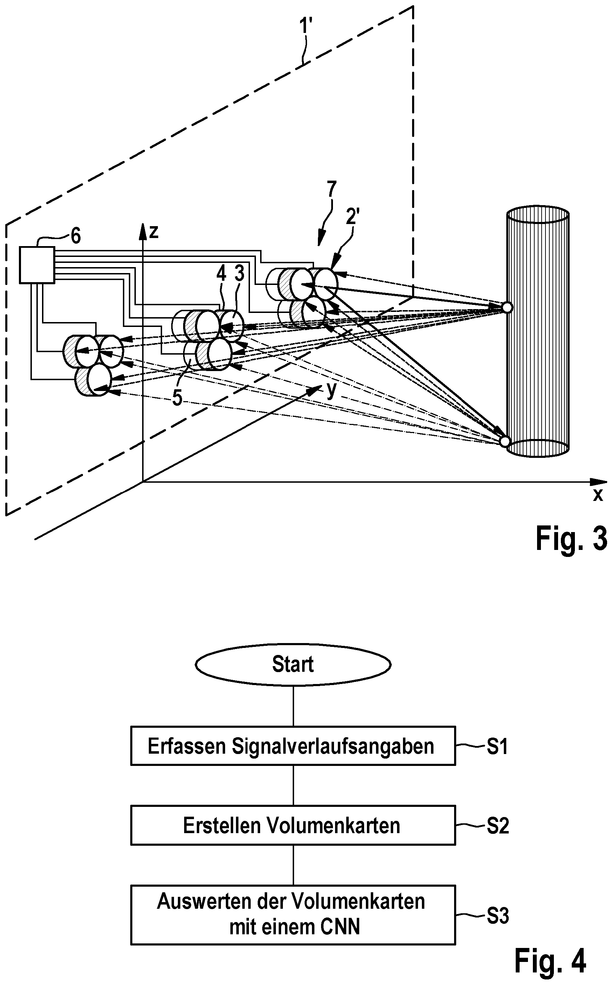

Figur 3 zeigt eine alternative Ausführung eines Ultraschall-Sensorsystems 1', wobei Ultraschallwandler 2 in Sensorbaugruppen 7 zusammengefasst sind. Diese ermöglichen zusätzlich zu der oben beschriebenen Erfassung einer jeweiligen Signalverlaufsangabe auch die Ermittlung einer Phasendifferenz zwischen den Ultraschall-Empfangssignalen jeweils durch Ultraschallwandler derselben Sensorbaugruppe 7. Die Phasendifferenz kann ebenfalls eine Position des Reflexionspunktes im Erfassungsbereich angeben. Zusätzlich zu der Signalverlaufsangabe kann eine Sensorbaugruppe 7 somit auch Phasenverschiebungen zwischen den Ultraschall-Empfangssignalen der Ultraschallempfänger einer Sensorbaugruppe 7 gemäß einem zeitlichen Verlauf an die Steuereinheit bereitstellen.

Die Ultraschallwandler der Sensorbaugruppe 7 können lokal benachbart angeordnet sein, wobei die Anordnung im Wesentlichen beliebig ist. Insbesondere müssen die Ultraschallwandler 2 nicht symmetrisch zueinander angeordnet sein. Eine bauliche Einschränkung von herkömmlichen Ultraschallsensorbaugruppen, dass die Ultraschallwandler 2 bezüglich ihrer Mittelpunkte mit einem Abstand von kleiner als einer halben Wellenlänge bezüglich der Ultraschallsendefrequenz anzuordnen sind, besteht hier nicht, da aufgrund der weiteren Informationsquellen aus den Signalverlaufsangaben keine Eindeutigkeit bei der Positionsbestimmung mithilfe der Phasenverschiebung zwischen Ultraschall-Sendesignal und Ultraschall-Empfangssignal durch eine Sensorbaugruppe 7 erreicht werden soll.

In Figur 4 ist ein Flussdiagramm zur Veranschaulichung eines Verfahrens zum Ermitteln einer Umgebungskarte mithilfe Ultraschallsensorsignalen ausführlicher beschrieben.

Zunächst werden für das Ultraschall-Sensorsystem 1 der Figur 1 die entsprechenden Signalverlaufsangaben, die den zeitlichen Verlauf einer Signalstärke mit Bezug zu einem Referenzzeitpunkt, wie z. B. dem Aussendezeitpunkt des Ultraschall-Sendesignals, angeben, bereitgestellt. Dabei dient jeder der Ultraschallwandler 2 nacheinander als Ultraschallsender zum Aussenden des Ultraschall-Sendesignals, und jeder der Ultraschallwandler als Ultraschallempfänger für jeweils ein reflektiertes ausgesendetes Ultraschall-Sendesignal, d. h. ein Ultraschall-Empfangssignal. Somit können bei Verwendung von drei Ultraschallwandlern 2 neun unterschiedliche Signalverlaufsangaben erfasst werden. Diese Signalverlaufsangaben beinhalten die Information über die Signallaufzeit, die Dämpfung über die Signalstrecke sowie die Sende- und Empfangs-Richtcharakteristiken bezüglich sendendem und empfangendem Ultraschallwandler 2. Zudem kann jede der Signalverlaufsangaben Informationen über ein oder mehrere Reflexionspunkte R an einem oder mehreren Umgebungsobjekten O beinhalten.

In Schritt S2 wird aus den jeweiligen Signalverlaufsangaben jeweils eine Volumenkarte erstellt. Die Volumenkarte entspricht einem dreidimensionalen Gitter, deren Gitterpunkte Voxeln (Raumpunkten) entsprechen und das den Erfassungsbereich abbildet. Jeder Gitterknoten in dem dreidimensionalen Gitter entspricht einem Raumpunkt in dem Erfassungsbereich. Die Volumenkarten werden nun mit den Messwerten aus den Signalverlaufsangaben versehen. Dazu wird aus jeder Signalverlaufsangabe eine Volumenkarte erzeugt.

In die Volumenkarte $V_i$ werden den Voxeln x Signalstärkeangaben $a_{s,r}$ aus den Signalverlaufsangaben $a_{s,r}(t)$ zugeordnet.

$$V_i(\boldsymbol{x}) = \left\| a_{s,r}\left( t = \tau_{s,r}(\boldsymbol{x}) \right) \right\|, \tau_{s,r}(\boldsymbol{x}) = c^{-1}(\| \boldsymbol{x}_s - \boldsymbol{x} \| + \| \boldsymbol{x}_r - \boldsymbol{x} \|),$$

wobei $\boldsymbol{x}_s = (x_s, y_s\, z_s)^T$ einer Raumposition des sendenden Ultraschallwandlers und $x_r = (x_r\, y_r\, z_r)^T$ einer Raumposition des empfangenden Ultraschallwandlers 2 entspricht.

Es wird also für jedes Voxel der Volumenkarte die Signalstrecke zwischen dem für die betreffende Volumenkarte betrachteten empfangenden und sendenden Ultraschallwandler ermittelt und mit der Schallgeschwindigkeit c die daraus resultierende Signallaufzeit bestimmt.

Die Signallaufzeit $\tau_{s,r}(\boldsymbol{x})$ entspricht nun der Zeitdauer, für die die Signalstärke aus der Signalverlaufsangabe entnommen wird und dem entsprechenden Voxel zugeordnet wird. Die Schallgeschwindigkeit c kann zusätzlich temperatur- und luftfeuchteabhängig berücksichtigt werden.

Auf diese Weise kann für jede Ultraschallsender-Ultraschallempfänger-Kombination eine Volumenkarte erstellt werden.

Werden Sensorbaugruppen 7 entsprechend der Figur 3 verwendet, so können weitere Volumenkarten basierend auf weiteren Ultraschallsender-Ultraschallempfänger-Kombinationen und basierend auf einer Phasenversatzverlaufsangabe erstellt werden, die jeweils den zeitlichen Verlauf der Phasendifferenzen zwischen den Ultraschallempfangssignalen einer Sensorbaugruppe 7 angeben. Mit anderen Worten, es werden statt den Signalstärken die resultierenden Phasenversätze jedem Voxel der zu erstellenden Volumenkarte zugeordnet.

In Schritt S3 werden die so erstellten Volumenkarten einem künstlichen konvolutionellen neuronalen Netz (CNN) zugeführt. Das neuronale Netz ist trainiert, den Volumenkarten ein Abstandsprofil von Umgebungsobjekten O im Erfassungsbereich E zuzuordnen.

Alternativ können die erstellten Volumenkarten auch in einem künstlichen tiefen neuronalen Netz (DNN) verarbeitet werden, dass die Volumenkarten als Eingangsdaten erhält und ein entsprechendes Abstandsprofil bereitstellt.

Das Abstandsprofil kann für jede Raumrichtung ausgehend von einem Bezugspunkt des Ultraschall-Sensorsystems den Abstand eines Umgebungsobjekts bzw. eines Reflexionspunktes auf einem Umgebungsobjekt angeben. Dies kann beispielsweise durch eine eine vertikale Fläche des Erfassungsbereich senkrecht zur Erfassungsrichtung repräsentierende Umgebungskarte angegeben werden, deren Einträge den jeweiligen Abstand zu einem Reflexionspunkt angeben.

Grundsätzlich sind vielfältige Topologien des neuronalen Netzes zur Verarbeitung der Volumenkarten denkbar.

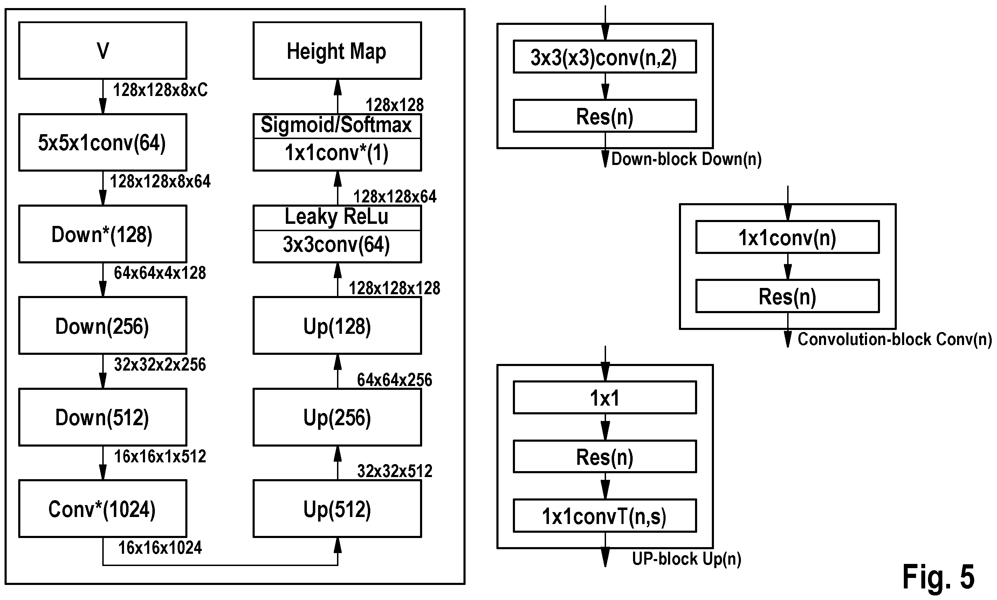

In Figur 5 ist beispielhaft schematisch der Aufbau eines konvolutionellen neuronalen Netzes zur Auswertung der Volumenkarten dargestellt. Das neuronale Netz dient der 2D-Bildrekonstruktion, wobei die Volumenkarten beispielsweise eine Größe von 128 x 128 x 8 Pixel aufweisen. Jede der Volumenkarten kann eingangsseitig des konvolutionellen neuronalen Netzes als ein separater Kanal vorgesehen sein.

In einer Anzahl von Down-Blöcken wird die Anzahl der Voxel pro Volumenkarte jeweils in jeder Raumdimension halbiert, und die Anzahl der Kanäle verdoppelt. Insbesondere erfolgt die Operation der Down-Blöcke so lange, bis die Höhendimension 1 entspricht.

Anschließend erfolgt eine Erweiterung der Anzahl der Pixel der 2D-Karte um einen Faktor 2 in jeder der zwei Raumdimensionen in aufeinanderfolgenden Up-Blöcken. Sowohl die Down-Blöcke als auch die Up-Blöcke verwenden Residual Units, die aus einem Batch Normalization Layer, gefolgt von einem konvolutionellen Layer mit n Kanälen und einem ReLU Layer als Aktivierungsfunktion aufgebaut sind.

Mithilfe einer Sigmoid-Aktivierungsfunktion für eine Höhenkarte als Ausgang oder einer Softmax-Aktivierungsfunktion im Fall einer Höhenklassifikation kann als letzte Schicht ein entsprechendes Abstandsprofil ausgegeben werden.

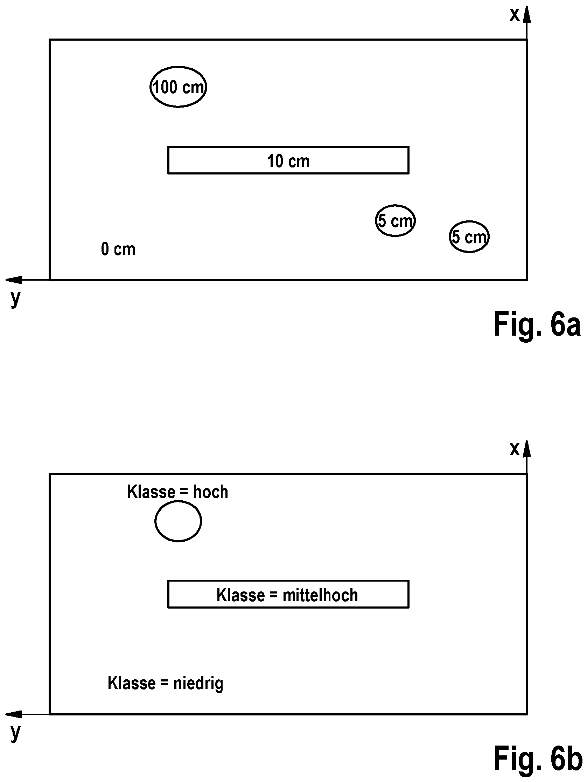

Das Abstandsprofil kann alternativ eine reduzierte Umgebungskarte darstellen, die eine insbesondere horizontale Fläche des Erfassungsbereichs abbildet und den Gitterpunkten der Karte jeweils eine Höheninformation bzw. eine Höhenklasse eines dort befindlichen Umgebungsobjekts zuordnet. Die abgebildete Fläche des Erfassungsbereichs kann durch eine horizontale Empfangsrichtung und der Dimension der Entfernung bezüglich eines Bezugspunkts des Sensorsystems bestimmt werden. Solche Abstandsprofile können als Höhenprofile beispielsweise wie in den Figuren 6a und 6b repräsentativ dargestellt angegeben werden. Derartige Abstandsprofile reduzieren die Raumpositionen von Umgebungsobjekten auf eine Position in der Ebene und geben lediglich eine Höhe des Umgebungsobjekts an. Ein solches Höhenprofil hat einen im Vergleich zu dem vollständigen Abstandsprofil reduzierten Informationsgehalt. Dadurch kann die Komplexität des verwendeten neuronalen Netzes reduziert werden, was eine Anwendung in Echtzeit mit verringerten Rechenanforderungen ermöglicht.

Die Höhenprofile können für Anwendungen, wie z. B. bei einer Rangierhilfe, in einem Kraftfahrzeug ausreichend sein, da im Umgebungsbereich eines Kraftfahrzeugs in der Regel nur auf dem Untergrund befindliche und nicht freischwebende Umgebungsobjekte vorhanden sind.

**Patentansprüche**

1. In einer Steuereinheit (6) implementiertes Verfahren zum Betreiben eines Ultraschall-Sensorsystems (1) mit mehreren Ultraschallsendern und mehreren Ultraschallempfängern zum Erfassen von Umgebungsobjekten (O) in einem Erfassungsbereich (E), wobei insbesondere die Ultraschallsender und Ultraschallempfänger als Ultraschallwandler (2) ausgebildet sind, mit folgenden Schritten:

   - Aussenden eines Ultraschallsendesignals durch einen der Ultraschallsender und Empfangen eines jeweiligen Ultraschallempfangssignals durch die Ultraschallempfänger, wobei jeweils eine Signalverlaufsangabe bereitgestellt wird, die den zeitlichen Verlauf der Signalstärke mit Bezug zu dem Aussendezeitpunkt des Ultraschallsendesignals angibt;
   - Ermitteln eines Abstandsprofils abhängig von den Signalverlaufsangaben mithilfe eines neuronalen Netzes, das trainiert ist, abhängig von den Signalverlaufsangaben ein Abstandsprofil über im Erfassungsbereich (E) befindliche Umgebungsobjekte (O) auszugeben,

   **dadurch gekennzeichnet, dass**
   das Ermitteln des Abstandsprofils die folgenden weiteren Schritte umfasst:

   - Erstellen von den Erfassungsbereich (E) repräsentierenden Volumenkarten für jede Kombination eines sendenden Ultraschallwandlers oder Ultraschallsenders und eines empfangenden Ultraschallwandlers oder eines Ultraschallempfängers abhängig von den jeweiligen Signalverlaufsangaben, wobei eine Volumenkarte mögliche Positionen von Umgebungsobjekten (O) abhängig von der Signalverlaufsangabe angibt,

     wobei Elementen der Volumenkarte jeweils eine Signalstärkenangabe als ein Wert der Signalverlaufsangabe zu einem bestimmten Zeitpunkt nach dem Zeitpunkt des Aussendens des Ultraschallsendesignals zugeordnet wird, wobei die Volumenkarte einer 3D-Matrix entspricht und in der Volumenkarte jedes Element einem zu repräsentierenden Raumpunkt bzw. Raumbereich des Erfassungsbereichs zugeordnet ist, wobei die Signalstärkenangabe, die dem Element zugeordnet wird, demjenigen Wert der Signalverlaufsangabe zu einem Zeitpunkt, der der Signallaufzeit entlang einer Strecke vom sendenden Ultraschallwandler bzw. Ultraschallsender zu dem das Element repräsentierenden Raumpunkt im Erfassungsbereich und zurück zu dem empfangenden Ultraschallwandler bzw. Ultraschallempfänger entspricht, wobei die Volumenkarte abhängig von den Positionen des betreffenden Ultraschallsenders und des betreffenden Ultraschallempfängers erstellt wird, wobei den Elementen der Volumenkarte jeweils diejenige Signalstärke der betreffenden Signalverlaufsangabe zugeordnet wird, die einem Zeitpunkt mit Bezug auf das Aussenden des Ultraschallsendesignals zugeordnet ist, der der Signallaufzeit des Ultraschallsendesignals zwischen dem Senden und dem Empfangen entspricht;

   - Ermitteln eines Abstandsprofils abhängig von den Volumenkarten und mithilfe des neuronalen Netzes, das trainiert ist, um den Volumenkarten ein Abstandsprofil über im Erfassungsbereich (E) befindliche Umgebungsobjekte (O) zuzuordnen,
   - wobei das Abstandsprofil ein Flächenprofil darstellt, das den Umgebungsobjekten (O) eine Höhenangabe über einer Grundfläche zuordnet, oder
   - wobei das Abstandsprofil für mehrere Raumrichtungen ausgehend von einem Bezugspunkt des Ultraschall-Sensorsystems den Abstand eines Umgebungsobjekts bzw. eines Reflexionspunktes auf einem Umgebungsobjekt angibt.

2. Verfahren nach Anspruch 1, wobei das neuronale Netz als tiefes neuronales Netz oder als ein konvolutionelles neuronales Netz ausgebildet ist.

3. Ultraschall-Sensorsystem (1) mit mehreren Ultraschallsendern und mehreren Ultraschallempfängern zum Erfassen von Umgebungsobjekten (O) in einem Erfassungsbereich (E) und einer Steuereinheit (6), wobei insbesondere die Ultraschallsender und Ultraschallempfänger als Ultraschallwandler (2) ausgebildet sind, wobei die Steuereinheit (6) ausgebildet ist zum:

   - Steuern des Aussendens eines Ultraschallsendesignals durch einen der Ultraschallsender und des Empfangens eines jeweiligen Ultraschallempfangssignals durch die Ultraschallempfänger, wobei jeweils eine Signalverlaufsangabe bereitgestellt wird, die den zeitlichen Verlauf der Signalstärke mit Bezug zu dem Aussendezeitpunkt des Ultraschallsendesignals angibt;

- Erstellen von den Erfassungsbereich (E) repräsentierenden Volumenkarten abhängig von jeweils mindestens einer der Signalverlaufsangaben, wobei eine Volumenkarte mögliche Positionen von Umgebungsobjekten (O) abhängig von der Signalverlaufsangabe angibt;

- Ermitteln eines Abstandsprofils abhängig von den Volumenkarten und eines neuronalen Netzes, das trainiert ist, um den Volumenkarten ein Abstandsprofil über im Erfassungsbereich (E) befindliche Umgebungsobjekte (O) zuzuordnen, **dadurch gekennzeichnet, dass** die Steuereinheit (6) weiterhin zum Ermitteln des Abstandsprofils ausgebildet ist zum:

 o Erstellen von den Erfassungsbereich (E) repräsentierenden Volumenkarten für jede Kombination eines sendenden Ultraschallwandlers oder Ultraschallsenders und eines empfangenden Ultraschallwandlers oder eines Ultraschallempfängers abhängig von den jeweiligen Signalverlaufsangaben, wobei eine Volumenkarte mögliche Positionen von Umgebungsobjekten (O) abhängig von der Signalverlaufsangabe angibt, wobei Elementen der Volumenkarte jeweils eine Signalstärkenangabe als ein Wert der Signalverlaufsangabe zu einem bestimmten Zeitpunkt nach dem Zeitpunkt des Aussendens des Ultraschallsendesignals zugeordnet wird, wobei die Volumenkarte einer 3D-Matrix entspricht und in der Volumenkarte jedes Element einem zu repräsentierenden Raumpunkt bzw. Raumbereich des Erfassungsbereichs zugeordnet ist; wobei die Signalstärkenangabe, die dem Element zugeordnet wird, demjenigen Wert der Signalverlaufsangabe zu einem Zeitpunkt, der der Signallaufzeit entlang einer Strecke vom sendenden Ultraschallwandler bzw. Ultraschallsender zu dem das Element repräsentierenden Raumpunkt im Erfassungsbereich und zurück zu dem empfangenden Ultraschallwandler bzw. Ultraschallempfänger entspricht, wobei die Volumenkarte abhängig von den Positionen des betreffenden Ultraschallsenders und des betreffenden Ultraschallempfängers erstellt wird, wobei den Elementen der Volumenkarte jeweils diejenige Signalstärke der betreffenden Signalverlaufsangabe zugeordnet wird, die einem Zeitpunkt mit Bezug auf das Aussenden des Ultraschallsendesignals zugeordnet ist, der der Signallaufzeit des Ultraschallsendesignals zwischen dem Senden und dem Empfangen entspricht;

 o Ermitteln eines Abstandsprofils abhängig von den Volumenkarten und mithilfe des neuronalen Netzes, das trainiert ist, um den Volumenkarten ein Abstandsprofil über im Erfassungsbereich (E) befindliche Umgebungsobjekte (O) zuzuordnen,

wobei das Abstandsprofil ein Flächenprofil darstellt, das den Umgebungsobjekten (O) eine Höhenangabe über einer Grundfläche zuordnet, oder wobei das Abstandsprofil für mehrere Raumrichtungen ausgehend von einem Bezugspunkt des Ultraschall-Sensorsystems den Abstand eines Umgebungsobjekts bzw. eines Reflexionspunktes auf einem Umgebungsobjekt angibt.

## Claims

1. A method implemented in a control unit (6) for operating an ultrasonic sensor system (1) having a plurality of ultrasonic transmitters and a plurality of ultrasonic receivers for detecting environmental objects (O) in a detection zone (E), wherein in particular the ultrasonic transmitters and ultrasonic receivers are in the form of ultrasonic transducers (2), having the following steps:

 - emitting an ultrasonic transmission signal by one of the ultrasonic transmitters and receiving a respective ultrasonic reception signal by the ultrasonic receivers, wherein in each case a signal profile information is provided which indicates the time profile of the signal strength with respect to the instant of transmission of the ultrasonic transmission signal;

 - determining a distance profile as a function of the signal profile information with the aid of a neural network which is trained to output a distance profile relating to environmental objects (O) situated in the detection zone (E) as a function of the signal profile information,

**characterized in that** the determination of the distance profile comprises the following further steps:

 - creating volume maps representing the detection range (E) for each combination of a transmitting ultrasonic transducer or ultrasonic transmitter and a receiving ultrasonic transducer or an ultrasonic receiver depending on the respective signal profile information, wherein a volume map indicates possible positions of environmental objects (O) depending on the signal profile information,

wherein elements of the volume map are each assigned a signal strength indication as a value of the signal profile information at a specific time instance after the time instance of transmission of the ultrasonic transmission signal,

wherein the volume map corresponds to a 3D matrix and in the volume map each element is assigned to a spatial point or spatial region of the detection range to be represented,

wherein the signal strength indication associated with the element corresponds to the value of the signal profile information at a time instance that corresponds to the signal propagation time along a path from the transmitting ultrasonic transducer or ultrasonic transmitter to the spatial point in the detection area that represents the element and back to the receiving ultrasonic transducer or ultrasonic receiver,

wherein the volume map is generated in dependence on the positions of the relevant ultrasound transmitter and the relevant ultrasound receiver, wherein the elements of the volume map are each assigned that signal strength of the relevant signal profile information assigned to a time instance with respect to the transmission of the ultrasonic transmission signal that corresponds to the signal transit time of the ultrasonic transmission signal between transmission and reception;

- determining a distance profile as a function of the volume maps and with the aid of the neural network, which is trained to assign a distance profile to the volume maps relating to environmental objects (O) situated in the detection zone (E),
- wherein the distance profile represents an area profile which assigns a height indication above a base surface to the environmental objects (O), or wherein the distance profile indicates the distance of an environmental object or of a reflection point on an environmental object for a plurality of spatial directions starting from a reference point of the ultrasonic sensor system.

2. The method according to claim 1, wherein the neural network is configured as a deep neural network or as a convolutional neural network.

3. An ultrasonic sensor system (1) having a plurality of ultrasonic transmitters and a plurality of ultrasonic receivers for detecting environmental objects (O) in a detection zone (E) and a control unit (6), in particular the ultrasonic transmitters and ultrasonic receivers being in the form of ultrasonic transducers (2), the control unit (6) being designed for:

- controlling the transmission of an ultrasonic transmission signal by one of the ultrasonic transmitters and the reception of a respective ultrasonic reception signal by the ultrasonic receivers, in each case a signal profile information item being provided which indicates the time profile of the signal strength indication with respect to the transmission time of the ultrasonic transmission signal;
- creating volume maps representing the detection zone (E) as a function of at least one of the signal profile information, a volume map indicating possible positions of environmental objects (O) as a function of the signal profile information;
- determining a distance profile as a function of the volume maps and a neural network which is trained to assign a distance profile to the volume maps relating to environmental objects (O) situated in the detection zone (E), **characterized in that** the control unit (6) is furthermore designed to determine the distance profile in order to:

- create volume maps representing the detection range (E) for each combination of a transmitting ultrasonic transducer or ultrasonic transmitter and a receiving ultrasonic transducer or an ultrasonic receiver, depending on the respective signal profile information, a volume map indicating possible positions of environmental objects (O) depending on the signal profile information, wherein elements of the volume map are each assigned a signal strength indication as a value of the signal profile information at a specific time instance after the time instance of transmission of the ultrasonic transmission signal, wherein the volume map corresponds to a 3D matrix and in the volume map each element is assigned to a spatial point or spatial region of the detection range to be represented;

wherein the signal strength indication associated with the element corresponds to the value of the signal profile information at a time instance that corresponds to the signal transit time along a path from the transmitting ultrasonic transducer or ultrasonic transmitter to the spatial point in the detection area that represents the element and back to the receiving ultrasonic transducer or ultrasonic receiver,

wherein the volume map is generated in dependence on the positions of the relevant ultrasound transmitter and the relevant ultrasound receiver, wherein the elements of the volume map are each assigned that signal strength indication of the relevant signal profile information assigned to a time

**EP 3 896 487 B1**

instance with reference to the transmission of the ultrasonic transmission signal, which corresponds to the signal transit time of the ultrasonic transmission signal between transmission and reception;

- determine a distance profile dependent on the volume maps and with the aid of the neural network, which is trained to assign a distance profile to the volume maps relating to environmental objects (O) situated in the detection zone (E),
wherein the distance profile represents an area profile, which assigns the environmental objects (O) a height indication above a base area, or wherein the distance profile indicates the distance of an environmental object or a reflection point on an environmental object for a plurality of spatial directions starting from a reference point of the ultrasonic sensor system.

**Revendications**

1. Procédé mis en œuvre dans une unité de commande (6) pour faire fonctionner un système de capteurs ultrasoniques (1) comportant plusieurs émetteurs ultrasoniques et plusieurs récepteurs ultrasoniques pour détecter des objets environnementaux (O) dans une zone de détection (E), dans lequel en particulier les émetteurs ultrasoniques et les récepteurs ultrasoniques se présentent sous la forme de transducteurs ultrasoniques (2), comportant les étapes suivantes :

- émission d'un signal de transmission ultrasonique par l'un des émetteurs ultrasoniques et réception d'un signal de réception ultrasonique respectif par les récepteurs ultrasoniques, avec dans chaque cas une information sur le profil du signal qui indique le profil temporel de l'intensité du signal par rapport à l'instant d'émission du signal de transmission ultrasonique ;
- déterminer un profil de distance en fonction des informations sur le profil du signal à l'aide d'un réseau neuronal entraîné à produire un profil de distance relatif aux objets environnementaux (O) situés dans la zone de détection (E) en fonction des informations sur le profil du signal,

**caractérisé par le fait que** la détermination du profil de distance comprend les étapes suivantes :

- création de cartes de volume représentant la zone de détection (E) pour chaque combinaison d'un transducteur ultrasonique émetteur ou d'un émetteur ultrasonique et d'un transducteur ultrasonique récepteur ou d'un récepteur ultrasonique en fonction des informations respectives sur le profil du signal,

dans lequel une carte de volume indique les positions possibles des objets environnementaux (O) en fonction des informations sur le profil du signal, dans lequel les éléments de la carte de volume reçoivent chacun une indication de l'intensité du signal en tant que valeur de l'information sur le profil du signal à un moment précis après le moment de la transmission du signal de transmission ultrasonique,
la carte de volume correspond à une matrice 3D et, dans la carte de volume, chaque élément est affecté à un point spatial ou à une région spatiale de la plage de détection à représenter,
l'indication de l'intensité du signal associée à l'élément correspond à la valeur des informations sur le profil du signal à un moment qui correspond au temps de propagation du signal le long d'un trajet allant du transducteur ultrasonique émetteur ou de l'émetteur ultrasonique au point spatial de la zone de détection qui représente l'élément, puis au transducteur ultrasonique récepteur ou au récepteur ultrasonique,
la carte de volume est générée en fonction des positions de l'émetteur et du récepteur ultrasoniques concernés, les éléments de la carte de volume se voyant chacun attribuer l'intensité du signal des informations relatives au profil du signal concerné, attribuée à un moment de la transmission du signal de transmission ultrasonique qui correspond au temps de transit du signal de transmission ultrasonique entre l'émission et la réception ; - déterminer un profil de distance en fonction des cartes de volume et à l'aide du réseau neuronal, qui est entraîné à attribuer un profil de distance aux cartes de volume relatives aux objets environnementaux (O) situés dans la zone de détection (E),

- dans lequel le profil de distance représente un profil de surface qui attribue aux objets environnementaux (O) une indication de hauteur au-dessus d'une surface de base, ou dans lequel le profil de distance indique la distance d'un objet environnemental ou d'un point de réflexion sur un objet environnemental pour plusieurs directions spatiales à partir d'un point de référence du système de capteurs ultrasoniques.

2. Méthode selon la revendication 1, dans laquelle le réseau neuronal est configuré comme un réseau neuronal profond ou comme un réseau neuronal convolutif.

3. Système de capteurs ultrasoniques (1) comportant plusieurs émetteurs ultrasoniques et plusieurs récepteurs ultrasoniques pour la détection d'objets environnementaux (O) dans une zone de détection (E) et une unité de commande (6), en particulier les émetteurs ultrasoniques et les récepteurs ultrasoniques se présentant sous la forme de transducteurs ultrasoniques (2), l'unité de commande (6) étant conçue pour :

- commander l'émission d'un signal de transmission ultrasonique par l'un des émetteurs ultrasoniques et la réception d'un signal de réception ultrasonique respectif par les récepteurs ultrasoniques, en fournissant dans chaque cas une information sur le profil du signal qui indique le profil temporel de l'indication de l'intensité du signal par rapport à la durée d'émission du signal de transmission ultrasonique ;
- créer des cartes de volume représentant la zone de détection (E) en fonction d'au moins une des informations sur le profil du signal, une carte de volume indiquant les positions possibles des objets environnementaux (O) en fonction des informations sur le profil du signal ;
- déterminer un profil de distance en fonction des cartes de volume et d'un réseau neuronal entraîné à attribuer un profil de distance aux cartes de volume relatives aux objets environnementaux (O) situés dans la zone de détection (E), **caractérisé en ce que** l'unité de commande (6) est en outre conçue pour déterminer le profil de distance afin de :
- créer des cartes de volume représentant la zone de détection (E) pour chaque combinaison d'un transducteur ultrasonique émetteur ou d'un émetteur ultrasonique et d'un transducteur ultrasonique récepteur ou d'un récepteur ultrasonique, en fonction des informations respectives sur le profil du signal, une carte de volume indiquant les positions possibles des objets environnementaux (O) en fonction des informations sur le profil du signal, dans laquelle les éléments de la carte de volume reçoivent chacun une indication de l'intensité du signal en tant que valeur de l'information sur le profil du signal à un moment précis après le moment de la transmission du signal de transmission ultrasonique, dans laquelle la carte de volume correspond à une matrice 3D et dans laquelle chaque élément de la carte de volume est affecté à un point spatial ou à une région spatiale de la plage de détection à représenter ;

l'indication de l'intensité du signal associée à l'élément correspond à la valeur des informations sur le profil du signal à un moment qui correspond au temps de transit du signal le long d'un trajet allant du transducteur ultrasonique émetteur ou du transmetteur ultrasonique au point spatial de la zone de détection qui représente l'élément, puis au transducteur ultrasonique récepteur ou au récepteur ultrasonique, la carte de volume est générée en fonction des positions de l'émetteur et du récepteur ultrasoniques concernés, les éléments de la carte de volume se voyant chacun attribuer l'indication d'intensité du signal des informations de profil du signal concernées, attribuée à une instance temporelle en référence à la transmission du signal de transmission ultrasonique, qui correspond au temps de transit du signal de transmission ultrasonique entre l'émission et la réception ;

- déterminer un profil de distance en fonction des cartes de volume et à l'aide du réseau neuronal, qui est entraîné à attribuer un profil de distance aux cartes de volume relatives aux objets environnementaux (O) situés dans la zone de détection (E),

dans lequel le profil de distance représente un profil de surface, qui attribue aux objets environnementaux (O) une indication de hauteur au-dessus d'une surface de base, ou dans lequel le profil de distance indique la distance d'un objet environnemental ou d'un point de réflexion sur un objet environnemental pour plusieurs directions spatiales à partir d'un point de référence du système de capteurs ultrasoniques.

Fig. 1

**Fig. 2a**

**Fig. 2b**

**Fig. 3**

**Fig. 4**

Fig. 5

EP 3 896 487 B1

Fig. 6a

Fig. 6b

**IN DER BESCHREIBUNG AUFGEFÜHRTE DOKUMENTE**

**In der Beschreibung aufgeführte Patentdokumente**

- DE 102017011329 A1

- DE 102017121581 A1

**In der Beschreibung aufgeführte Nicht-Patentliteratur**

- **POPPERLI M. et al.** Capsule Neural Network based Height Clasification using Low-cost Automotive Ultrasonic Sensors. *IEEE Intelligent Vehicle Symposium*, 2019, 661-666